(19) Europäisches Patentamt
European Patent Office
Office européen des brevets

(11) **EP 0 795 434 A1**

(12) **DEMANDE DE BREVET EUROPEEN**

(43) Date de publication:
**17.09.1997 Bulletin 1997/38**

(51) Int Cl.6: **B60L 11/18, H02P 6/24**

(21) Numéro de dépôt: **97400526.6**

(22) Date de dépôt: **07.03.1997**

(84) Etats contractants désignés:
**DE FR IT**

(30) Priorité: **12.03.1996 FR 9603088**

(71) Demandeur: **THOMSON-CSF**
**75008 Paris (FR)**

(72) Inventeurs:
• **Biais, François, Thomson-CSF, SCPI**
**94117 Arcueil Cedex (FR)**

• **Levi, Alain, Thomson-CSF, SCPI**
**94117 Arcueil Cedex (FR)**

(74) Mandataire: **Simonnet, Christine et al**
**THOMSON-CSF-S.C.P.I.,**
**13, Avenue du Président Salvador Allende**
**94117 Arcueil Cédex (FR)**

(54) **Véhicule à moteur électrique synchrone**

(57)     Véhicule électrique à moteur synchrone (10) comprenant un dispositif (21) pour régler le déphasage ($\theta$) entre la tension du stator et la force contre-électro-motrice,

Il comprend un moyen (42, $29_1$) pour imposer un déphasage nul entre la tension et la force contre-électromotrice. Ce déphasage nul est imposé, par exemple, quand est détecté un signal de fonctionnement anormal.

Ainsi, en cas de panne, le champ magnétique du rotor tournant ne provoque pas de freinage ou de courant (ou tension) dangereux.

FIG.1

EP 0 795 434 A1

## Description

L'invention est relative à un véhicule à moteur électrique synchrone. Elle concerne plus particulièrement un tel véhicule dans lequel le moteur est alimenté par un onduleur tirant son énergie d'une batterie d'accumulateurs.

Un système de traction de ce type répond en général aux exigences imposées pour la réalisation d'une voiture électrique de grande diffusion, à savoir : un coût modéré, un poids et des dimensions réduits et un rendement optimum.

Un moteur synchrone comporte, par exemple, d'une part, un rotor présentant un ou plusieurs aimants permanents et, d'autre part, un stator bobiné comprenant, en général, trois phases alimentées chacune par un courant alternatif. Les courants de ces trois phases sont déphasés de 120° les uns par rapport aux autres. Ils engendrent un champ tournant qui entraîne la rotation du rotor en synchronisme avec la rotation de ce champ.

Les courants alternatifs des phases du stator sont produits par un onduleur comprenant un nombre de paires d'interrupteurs commandés égal au nombre de phases du stator. Dans chaque paire, les interrupteurs sont en série et chaque paire d'interrupteurs en série est en parallèle sur la batterie d'accumulateurs. Le point commun à deux interrupteurs commandés en série est relié à la phase du stator associée à la paire d'interrupteurs.

La commande des interrupteurs est telle qu'à un instant donné, un seul interrupteur dans chaque paire est conducteur et, en valeur absolue, l'intensité du courant dans une phase est égale à la somme des intensités des courants dans les deux autres phases (si le stator est triphasé et monté en étoile).

Pour obtenir une variation sinusoïdale des courants dans chaque phase, on divise chaque alternance de ce courant sinusoïdal souhaité en plusieurs séquences de durées égales. Le nombre de séquences est, par exemple, égal à six. Au cours de chacune des séquences, l'intensité moyenne du courant dans l'interrupteur correspondant, et donc dans la phase associée, présente une valeur constante.

La commande du moteur est auto-synchrone, c'est-à-dire que la fréquence du signal alternatif est adaptée à la vitesse du rotor afin de garder le synchronisme entre le champ tournant et le rotor. A cet effet, un capteur lié au rotor indique, à chaque instant, la position angulaire de ce dernier. Le signal fourni par le capteur est utilisé pour commander les interrupteurs de l'onduleur et, notamment, pour régler la fréquence et la phase des courants alternatifs fournis au stator.

L'onduleur est alimenté par une batterie d'accumulateurs. Un contacteur, ou interrupteur, est disposé entre cette batterie et l'onduleur. Un condensateur de filtrage se trouve habituellement en parallèle sur l'onduleur.

L'invention part de la constatation que, lorsque le moteur électrique est entraîné par sa charge, il se comporte en générateur. Cette situation se produit notamment lorsque le véhicule est tracté et l'alimentation de l'onduleur est en panne ou déconnectée de ce dernier. Cette situation peut aussi intervenir en cas de panne brusque lorsque le véhicule est lancé. Dans ce cas, le rotor à aimant(s) permanent(s) induit une tension dans les bobinages du stator du moteur qui est susceptible d'engendrer un couple de freinage indésirable pour le véhicule. Cette tension induite risque aussi de détruire des composants de l'onduleur ou de son électronique de commande. Le problème est le même quand le rotor est bobiné et que son alimentation (en courant continu) est maintenue.

Pour résoudre ce problème, lorsque le moteur est entraîné par sa charge, l'onduleur est commandé de façon telle que la force électromotrice du moteur et la tension aux bornes du stator soient en phase.

De cette manière, le moteur n'engendre en principe pas de courant actif et, il ne se produit ni freinage, ni courants (et/ou tensions) dangereux pour l'onduleur et les circuits de commande.

Toutefois, il est pratiquement impossible d'éliminer complètement le courant actif. En effet, même si la force électromotrice et la tension sont parfaitement en phase, le courant actif est totalement éliminé seulement quand la résistance du moteur est nulle, ce qui n'est jamais le cas. En outre, les imperfections de la commande entraînent un léger retard de la tension par rapport à la force électromotrice.

Il en résulte que, malgré le déphasage nul entre la tension et la force électromotrice, le moteur se comporte habituellement comme un générateur de faible puissance. Dans ces conditions, si un condensateur est en parallèle sur l'onduleur, il se charge et sa tension peut atteindre des valeurs élevées qui pourraient être dangereuses pour l'onduleur ou l'électronique de commande.

C'est pourquoi, dans le mode de réalisation préféré, on prévoit un moyen pour décharger au moins partiellement ce condensateur quand la tension à ses bornes atteint un seuil déterminé.

Ce moyen de décharge du condensateur est avantageusement une commande du déphasage entre la tension et la force électromotrice : on confère à ce déphasage une valeur telle que le moteur présente un comportement dissipatif. Le condensateur se décharge alors dans les bobinages du stator.

Dans cette dernière réalisation, il est préférable de conférer une valeur minimale à ce déphasage afin d'éviter les à-coups de couple. Ce déphasage sera par exemple égal à l'angle, ou incrément, de rotation du rotor séparant deux impulsions successives produites par le capteur de positions du rotor. Cet incrément vaut en général 60°. Avec cette disposition, la commande est simplifiée et peut fonctionner même si certains de ses éléments sont en panne, notamment si un calculateur fournissant des déphasages entre deux impulsions est hors service.

Quel que soit le mode de réalisation, il est préférable que l'énergie des circuits de commande soit fournie par le moteur fonctionnant en alternateur. Ainsi, l'ensemble fonctionne correctement même si toutes les batteries sont en panne.

Selon un autre de ses aspects, l'invention est caractérisée en ce que, lorsque le moteur est entraîné par sa charge, on prévoit un moyen pour minimiser la puissance électrique induite par la rotation du rotor. De préférence, ce moyen est tel que le moteur est alternativement générateur et dissipateur afin que la puissance moyenne soit nulle.

D'autres caractéristiques et avantages de l'invention apparaîtront avec la description de certains de ses modes de réalisation, celle-ci étant effectuée en se référant aux dessins ci-annexés, sur lesquels :

la figure 1 est un schéma d'un moteur électrique synchrone, d'un onduleur et de circuits de commande associés, et
les figures 2, 3, 4 et 5 sont des diagrammes correspondant au fonctionnement du dispositif de la figure 1.

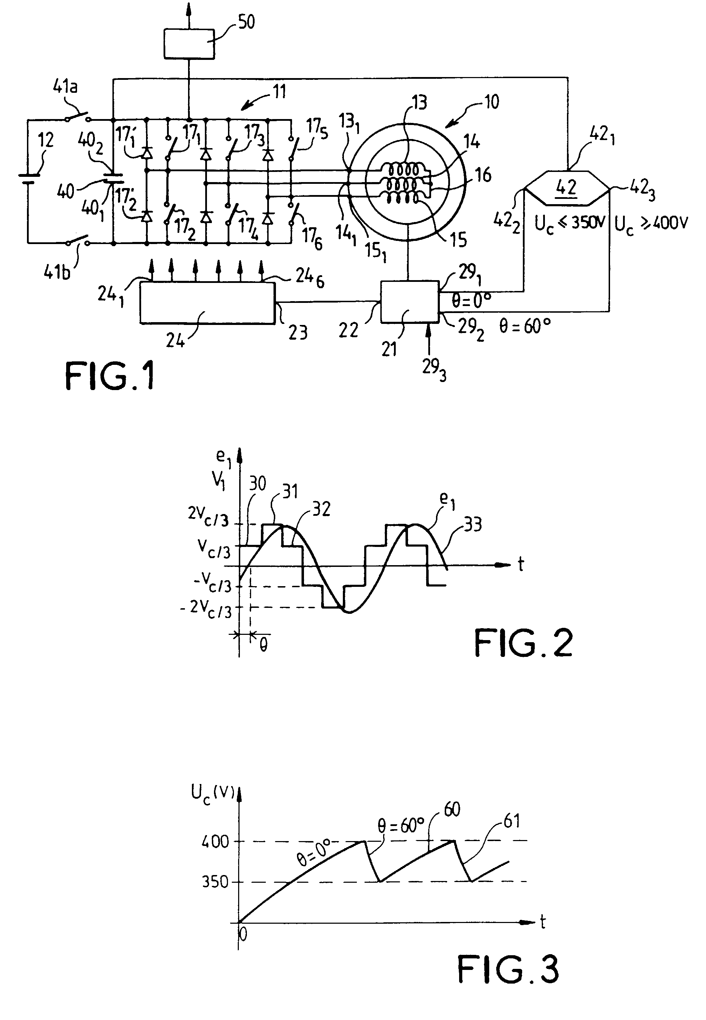

L'ensemble d'un moteur électrique synchrone 10 (figure 1) et d'un onduleur de tension 11, que l'on va décrire en relation avec les figures, est destiné à la traction d'un véhicule de type "voiture électrique" alimenté par une batterie d'accumulateurs 12.

Le moteur 10 de type synchrone comprend, de façon classique, un rotor à aimants permanents (non représenté sur la figure 1) et un stator triphasé présentant trois bobinages ou phases, respectivement 13, 14 et 15. Dans cet exemple, les phases 13, 14, 15 sont branchées en étoile, c'est-à-dire qu'elles comportent toutes les trois une borne commune 16.

Ces phases 13, 14 et 15 sont alimentées en courant alternatif grâce à l'onduleur 11. Le rôle de l'onduleur est de fournir aux trois phases 13, 14 et 15 des courants alternatifs présentant les uns par rapport aux autres un déphasage de 120°. C'est cette alimentation en courant alternatif et ces déphasages qui permettent d'engendrer un champ magnétique tournant provoquant la rotation du rotor.

L'onduleur de tension 11 comporte, de façon en soi connue, six interrupteurs commandés disposés selon trois paires, respectivement $17_1$, $17_2$ ; $17_3$, $17_4$ ; $17_5$, $17_6$. Dans chacune de ces paires les deux interrupteurs, $17_1$, $17_2$, par exemple, sont en série. La borne commune aux interrupteurs $17_1$, $17_2$ d'une paire en série, est connectée à la borne $13_1$ de la phase correspondante 13 qui est opposée à la borne 16. De même, les bornes communes aux interrupteurs $17_3$, $17_4$ ; $17_5$, $17_6$ sont connectées, respectivement, aux bornes $14_1$ et $15_1$ des phases 14 et 15.

Une diode $17'_1$, $17'_2$, etc. est branchée en parallèle sur chacun des interrupteurs $17_1$, $17_2$, etc.

Un circuit 21 à capteur fournit à chaque instant un signal indiquant la position du rotor par rapport au stator.

Par exemple, le capteur du circuit 21 produit à chaque tour six impulsions telles que deux impulsions successives correspondent à des positions séparées angulairement de 60°. Entre deux impulsions, un calculateur extrapole la position du rotor en fonction de sa vitesse de rotation. La sortie 22 du circuit 21 est reliée à l'entrée 23 d'un circuit de commande 24 des interrupteurs $17_1$ à $17_6$. On voit ainsi que le dispositif 24 comporte six sorties $24_1$ à $24_6$ affectées à la commande de chaque interrupteur. Par exemple, la sortie $24_1$ commande la conduction de l'interrupteur $17_1$.

Dans l'exemple, les interrupteurs 17 sont des transistors de puissance. En variante, ces interrupteurs sont des thyristors associés à des circuits de commutation forcée ou des thyristors GTO (thyristors ouvrables par la gâchette).

Un condensateur de filtrage 40 est en parallèle sur les diodes et interrupteurs 17, 17'. Ses armatures $40_1$ et $40_2$ sont reliées aux bornes, respectivement, négative et positive de la batterie 12 par l'intermédiaire de contacteurs, respectivement $41_b$ et $41_a$. Ces contacteurs sont des interrupteurs commandés simultanément.

La borne $40_2$ est reliée à l'entrée $42_1$ d'un circuit 42 comportant deux sorties $42_2$ et $42_3$ reliées à des entrées, respectivement $29_1$ et $29_2$ du circuit 21.

Comme on le verra plus loin, le signal sur l'entrée $29_1$ impose un déphasage $\theta$ nul entre la tension $\vec{V}_1$ aux bornes d'une phase du stator et la force électromotrice $\vec{e}_1$ correspondant à cette phase. Le signal sur l'entrée $29_2$ impose la valeur de 60° à ce déphasage $\theta$.

Le circuit 21 présente par ailleurs une entrée supplémentaire $29_3$ pour la commande ordinaire de l'angle $\theta$.

Les circuits de commande 21, 24 et 42 sont alimentés en énergie par une batterie basse puissance (non représentée), distincte de la batterie 12 de traction.

Par ailleurs, un convertisseur continu/continu 50 tire son énergie de l'onduleur 11 et permet aussi d'alimenter les circuits de commande en cas de panne (ou décharge) de la batterie correspondante à basse puissance.

On va maintenant décrire, en relation avec la figure 2, le fonctionnement, classique, de l'onduleur 11.

Cette figure 2 est un diagramme sur lequel le temps t a été porté en abscisses et, en ordonnées, on a représenté, d'une part, la tension $V_1$ aux bornes de la phase 13 du stator du moteur 10 et, d'autre part, la force contre-électromotrice $e_1$ du moteur 10 pour cette même phase 13.

La commande des interrupteurs est telle qu'à chaque instant, dans chaque paire, un seul interrupteur est fermé, et la répartition des trois interrupteurs fermés est telle qu'un seul d'entre eux est relié directement à la borne positive (ou négative) de la batterie 12 tandis que les deux autres interrupteurs sont connectés à la borne négative (ou positive) de cette même batterie. Dans ces conditions, l'intensité du courant circulant dans la phase correspondant à l'interrupteur connecté seul à une borne de la batterie est égale au double de l'intensité du courant circulant dans chacune des autres phases.

Ainsi la tension $V_1$ aux bornes de chacune des phases, par exemple celle de référence 13, prend alternativement les valeurs $1/3V_c$, $2/3V_c$, $-1/3 V_c$ et $-2/3V_c$ selon la séquence de fermeture des interrupteurs.

Cette séquence de fermeture des interrupteurs est telle qu'elle engendre les tensions alternatives désirées aux bornes de chaque phase 13, 14, 15. A cet effet, chaque demie alternance comprend trois paliers. Par exemple, la première demie alternance du signal $V_1$ (figure 2) comprend un premier palier 30 de tension $1/3V_c$, un second palier 31 de tension $2/3V_c$ et un troisième palier 32 de tension $1/3V_c$.

Pour moduler la tension aux bornes des bobinages du stator du moteur, chaque palier est engendré à partir d'une modulation à largeur d'impulsion MLI (non représentée). Une telle modulation consiste à commander à haute fréquence la conduction de chaque interrupteur. Au cours de chacune des périodes de découpage, de durée T, l'interrupteur correspondant est conducteur pendant une durée t qui est fonction de l'intensité (ou tension) désirée. En d'autres termes, c'est le rapport cyclique t/T qui détermine l'intensité de courant qui traversera le bobinage correspondant.

D'autres séquences de commande des interrupteurs 17 sont possibles. Par exemple, chaque palier (non montré) peut correspondre à seulement deux interrupteurs fermés ; dans ce cas le courant circule dans deux phases et est nul dans la troisième pour ce palier.

Par ailleurs, on voit sur la figure 2 que la force contre-électromotrice $e_1$, représentée par la courbe sinusoïdale 33, est déphasée d'une valeur θ par rapport à la tension $V_1$. Cette valeur θ est contrôlable par un signal appliqué sur l'entrée $29_3$ du circuit 21.

La commande du moteur 10 est telle que ce dernier garde en permanence le synchronisme, c'est-à-dire que la vitesse du champ tournant est constamment adaptée, grâce au capteur du circuit 21, à la vitesse de rotation du rotor.

En fonctionnement normal de traction, les interrupteurs $41_a$ et $41_b$ sont fermés.

Ces interrupteurs sont ouverts dans les autres cas, par exemple quand le véhicule est tracté, c'est-à-dire quand il n'a pas besoin d'être alimenté en énergie électrique de traction.

Il peut également se produire que ces interrupteurs $41_a$ et $41_b$ soient ouverts de façon accidentelle ou en raison d'un incident au cours de la progression du véhicule.

Dans ces situations, le rotor du moteur tourne et induit dans les phases 13, 14, 15 du stator des tensions qui peuvent provoquer un couple de freinage indésirable. En effet, quand le véhicule est tracté, il est préférable que ce dernier n'exerce pas de couple résistant. De même, quand le véhicule roule à grande vitesse et que, brusquement, de façon accidentelle, les interrupteurs $41_a$ et $41_b$ s'ouvrent, un couple de freinage pourrait être dangereux car surprenant pour le conducteur du véhicule.

Par ailleurs, une surtension aux bornes de l'onduleur pourrait provoquer la destruction de certains de ses composants ou de composants de circuits de commande.

C'est pourquoi on prévoit des dispositions permettant de limiter les tensions quand le moteur 10 tourne mais n'est plus alimenté ou, de façon plus générale, en cas de fonctionnement anormal.

Un fonctionnement anormal se détecte par la tension $U_c$ aux bornes du condensateur 40. Le circuit 42 effectue ces détections. Si la tension aux bornes du condensateur 40 prend une valeur inférieure ou égale à 350 volts, ce circuit 42 délivre sur sa sortie $42_2$ un signal de commande sur l'entrée $29_1$ qui impose la valeur zéro à l'angle θ de déphasage entre la force contre-électromotrice $e_1$ et la tension V1.

Si cette tension aux bornes du condensateur 40 dépasse une valeur déterminée, égale dans l'exemple à 400 volts, le circuit 42 engendre sur sa sortie $42_3$ un signal appliquant sur l'entrée $29_2$ du circuit 21 une commande pour que ledit angle θ soit égal à 60°.

Comme on le verra plus loin, un déphasage θ égal à zéro correspond à un fonctionnement du moteur 10 en générateur ou alternateur de faible puissance. Dans ces conditions, le condensateur 40 se charge lentement. Quand la tension à ses bornes atteint la valeur de 400 volts, le circuit 42 délivre un signal sur l'entrée $29_2$ du circuit 21 imposant un déphasage θ égal à 60°. Avec un tel déphasage, le moteur 10 est dissipateur et permet donc la décharge du condensateur 40. L'angle θ est maintenu à la valeur de 60° tant que la tension aux bornes de condensateur n'est pas descendue à la valeur de 350 volts. Quand cette tension atteint la valeur de 350 volts, on impose de nouveau un angle θ égal à zéro. Ainsi, la tension aux bornes du condensateur varie en dents de scie comme représenté sur la figure 3. Cette tension U présente donc, d'une part, des segments 60 à faible pente, c'est-à-dire à variation relativement lente en fonction du temps, qui correspondent à un déphasage nul, et des segments 61 à variation plus rapide correspondant à un déphasage égal à 60°.

En valeur moyenne, la puissance vue par le condensateur 40 et l'onduleur 11 est égale à zéro. Il ne se produit ainsi pas de couple de freinage gênant et les composants de l'onduleur 11 ne subissent pas de contraintes dirimantes.

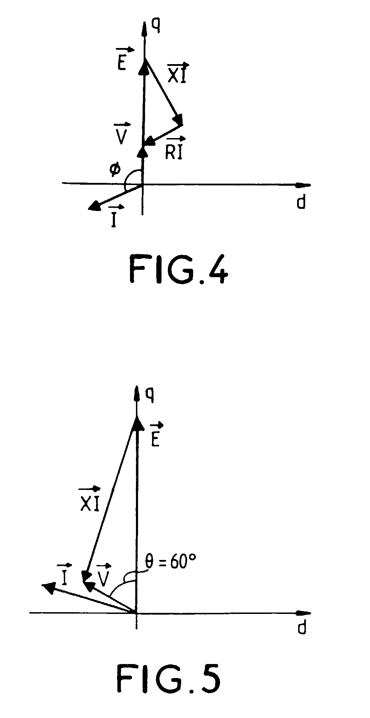

La figure 4 est un diagramme vectoriel sur lequel l'axe d représente l'axe magnétique du rotor et l'axe perpendiculaire représente la direction q dite "en quadrature".

A chaque instant, le champ électrique $\vec{E}$, et donc la force électromotrice $\vec{e}_1$, est perpendiculaire à l'axe des aimants. La commande des interrupteurs 17, effectuée grâce aux signaux sur les entrées 29 du circuit 21, permet de régler le déphasage θ du vecteur $\vec{V}_1$ (la tension aux bornes d'une phase) par rapport au vecteur $\vec{e}_1$ (la

force électromotrice correspondant à la même phase). Dans le cas de la figure 4, ce déphasage étant égal à zéro, les vecteurs $\vec{V}$ et $\vec{E}$ sont tous les deux sur l'axe q.

Le courant I est déphasé d'un angle $\Phi$ obtus par rapport à la tension V. L'intensité I et l'angle $\Phi$ sont fonction de l'impédance Z du moteur qui est formée d'une résistance de valeur R et d'une impédance inductive de valeur X. Ainsi :

$$I = \frac{E - V}{Z} \qquad (1)$$

$$Z = \sqrt{R^2 + X^2} \qquad (2).$$

La puissance absorbée a pour valeur :

$$VI\cos\Phi = V.\frac{E - V}{Z}.\cos\Phi = -V(E - V)\frac{R}{R^2 + X^2}$$

On voit que, dans ce cas, le moteur est faiblement générateur et la puissance restituée est faible car R est petit devant X.

La puissance restituée, par le moteur, est maximale pour : V = E/2. Elle a alors pour valeur :

$$P_{max} = 3\frac{E^2}{4} \cdot \frac{R}{R^2 + X^2} \qquad (4)$$

Le facteur 3 s'explique par le fait que le moteur a trois phases.

On a vu plus haut que la puissance restituée est faible. Toutefois elle n'est pas négligeable. Ainsi, dans un exemple, quand le moteur tourne à 8000 tours par minute :

X = 0,77 $\Omega$, R = 13 m$\Omega$, E = 210 $V_{eff}$.

La puissance restituée est alors maximale pour V = 105 $V_{eff}$ et vaut donc :

$$Pmax = 3VI\cos\Phi = 870 \text{ watts} \qquad (5)$$

L'intensité du courant de phase est : I = 15 $A_{eff}$.

Ce courant charge le condensateur 40.

Ce dernier se décharge, comme on l'a vu plus haut, quand on confère au déphasage $\theta$ une valeur de 60°. La figure 5 est un diagramme vectoriel analogue à celui de la figure 4, mais pour un angle $\theta$ égal à 60°. Sur ce diagramme, on a négligé la résistance R. Dans cette configuration, le moteur est dissipatif et permet donc, comme on l'a vu plus haut de décharger le condensateur 40 dans les bobinages du stator.

Le déphasage de 60° correspond à un angle de rotation du rotor séparant deux impulsions produites par le capteur du circuit 21. Cette valeur simplifie la réalisation des circuits puisqu'il n'est alors pas nécessaire de prévoir un moyen de calcul entre deux impulsions fournies par le capteur.

On notera que l'ensemble est tel que la commande fonctionne non seulement quand la batterie 12 fournissant l'énergie de traction est hors service, mais également quand la batterie (non représentée) d'alimentation des circuits de commande est également hors d'action puisque les circuits de commande tirent leur énergie du convertisseur 50 et donc de l'énergie fournie par le moteur 10 ou le condensateur 40.

Avec la commande que l'on vient de décrire, lorsque le moteur tourne alors qu'il n'est plus alimenté par la batterie 12, la puissance fournie par le moteur 10, fonctionnant en alternateur, est minimisée grâce au dé-phasage nul entre $\vec{V}$ et $\vec{E}$. Cette puissance est nulle en valeur moyenne quand le moteur fonctionne alternativement en générateur et en dissipateur.

L'invention n'est, bien entendu, pas limitée aux modes de réalisation décrits. En particulier, dans une variante, le moteur synchrone comporte un rotor bobiné. Le moteur synchrone est, dans un mode d'exécution, de type monophasé. S'il est polyphasé, le nombre de ses phases peut être quelconque. Dans le cas d'un moteur triphasé, le montage n'est pas limité à une structure en étoile ; elle peut, par exemple, être du type en triangle.

## Revendications

1. Véhicule électrique à moteur synchrone (10) comprenant un dispositif (21) pour régler le déphasage ($\theta$) entre la tension du stator et la force contre-électromotrice, caractérisé en ce qu'il comprend un moyen (42, $29_1$) pour imposer un déphasage nul entre la tension (V) et la force contre-électromotrice (e).

2. Véhicule selon la revendication 1, caractérisé en ce que le déphasage nul est imposé quand est détecté un signal de fonctionnement anormal.

3. Véhicule selon la revendication 2, caractérisé en ce que les bobinages (13, 14, 15) du stator du moteur (10) étant alimentés en énergie électrique par l'intermédiaire d'au moins un interrupteur ($41_a$, $41_b$), le signal de fonctionnement anormal apparaît quand cet interrupteur est ouvert.

4. Véhicule selon la revendication 3, caractérisé en ce que la source d'énergie électrique comprenant une batterie d'accumulateurs (12) alimentant un onduleur (11) par l'intermédiaire dudit interrupteur ($41_a$, $41_b$), et un condensateur (40) étant disposé en parallèle sur l'onduleur (11) à l'aval de l'interrupteur ($41_a$, $41_b$), le signal de fonctionnement anormal est fourni par la tension aux bornes du condensateur (40).

**5.** Véhicule selon la revendication 4, caractérisé en ce que l'on impose ledit déphasage nul entre la tension et la force contre-électromotrice quand la tension aux bornes du condensateur descend en dessous d'un premier seuil.

**6.** Véhicule selon la revendication 4 ou 5, caractérisé en ce qu'il comprend un moyen (42, $42_3$, $29_2$) pour décharger, au moins partiellement, le condensateur (40) quand la tension atteint un second seuil.

**7.** Véhicule selon la revendication 6, caractérisé en ce que, pour décharger le condensateur, on confère au déphasage ($\theta$) entre la tension et la force électromotrice, une valeur telle que le moteur présente un comportement dissipatif.

**8.** Véhicule selon la revendication 7, caractérisé en ce qu'un capteur fournissant un signal de position du rotor par rapport au stator du moteur (10), et ce capteur fournissant une impulsion chaque fois que le rotor a tourné d'un angle déterminé, ledit déphasage permettant la décharge du condensateur (40) est égal à l'angle déterminé.

**9.** Véhicule selon la revendication 8, caractérisé en ce que l'angle déterminé est égal à 60°.

**10.** Véhicule selon l'une quelconque des revendications précédentes, caractérisé en ce qu'il comprend un circuit de commande (24, 21, 42) alimenté en énergie électrique par un convertisseur (50) tirant son énergie du moteur (10).

**11.** Véhicule selon la revendication 10, caractérisé en ce que le convertisseur est du type continu/continu.

**12.** Véhicule selon la revendication 2, caractérisé en ce qu'un fonctionnement anormal correspond à un fonctionnement pour lequel le moteur (10) tourne sans être alimenté en énergie électrique.

**13.** Véhicule électrique à moteur synchrone (10), caractérisé en ce que, lorsque le moteur tourne sans être alimenté en énergie électrique, on prévoit un moyen (42, 21, 24) pour minimiser la puissance électrique induite par la rotation du rotor.

**14.** Véhicule selon la revendication 13, caractérisé en ce que ledit moyen est tel que le moteur (10) fonctionne alternativement en générateur et en moteur afin que la puissance moyenne soit nulle.

**15.** Véhicule selon l'une quelconque des revendications précédentes, caractérisé en ce que le moteur synchrone est du type à aimants permanents.

**16.** Véhicule selon l'une quelconque des revendications précédentes, caractérisé en ce que le moteur synchrone est du type triphasé monté en étoile.

FIG.1

FIG.2

FIG.3

FIG.4

FIG.5

**EP 0 795 434 A1**

Office européen des brevets

**RAPPORT DE RECHERCHE EUROPEENNE**

Numero de la demande
EP 97 40 0526

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 508 367 A (HONDA GIKEN K.K.) <br><br> * abrégé; figures 5,34 * <br> --- | 1,13,15, 16 | B60L11/18 <br> H02P6/24 |
| A | EP 0 488 163 A (HITACHI LTD) <br> * abrégé; figure 1 * <br> --- | 1,13 | |
| A | EP 0 576 307 A (AUXILEC) <br> * abrégé; figure 5 * <br> --- | 1,13 | |
| A | DE 44 40 823 A (HITACHI LTD) <br> * abrégé; figure 1 * <br> ----- | 1,13 | |

**DOMAINES TECHNIQUES RECHERCHES (Int.Cl.6)**

B60L
H02P

Le présent rapport a été établi pour toutes les revendications

| Lieu de la recherche | Date d'achèvement de la recherche | Examinateur |
|---|---|---|
| LA HAYE | 29 Avril 1997 | Beyer, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................
& : membre de la même famille, document correspondant

EPO FORM 1503 03.82 (P04C02)

9